# EUROPEAN PATENT APPLICATION

(11) **EP 4 642 131 A1**
(43) Date of publication of application: **29.10.2025**
(21) Application number: 22968824.7
(22) Date of filing: 19.12.2022
(51) Int. Cl.: H04W 72/12

(54) **COMMUNICATION SYSTEM BASED ON MULTI-USER MULTIPLE INPUT MULTIPLE OUTPUT (MIMO)**

(71) Applicant: Beijing Xiaomi Mobile Software Co., Ltd., Beijing 100085 (CN)
(72) Inventor: CHI, Liangang, Beijing 100085 (CN); DUAN, Gaoming, Beijing 100085 (CN)
(74) Representative: Dehns Germany Partnerschaft mbB
(86) International application number: PCT/CN2022/140165
(87) International publication number: WO 2024/130520

(57) **Abstract**

The present disclosure belongs to the technical field of communications. Provided are a communication system based on multi-user MIMO. The communication system comprises at least one control unit (CU), at least one transmission/reception point (TRP) and at least one terminal device. The at least one CU is used for scheduling a plurality of TRPs, and the CU corresponds to a TRP cluster. The TRP cluster comprises at least two TRPs, and the TRPs in the TRP cluster can be scheduled by the CU corresponding to the TRP cluster. The number of TRPs comprised in the TRP cluster corresponding to the CU is less than or equal to the total number of TRPs which can be scheduled by the CU. The TRPs comprised in the TRP cluster can change dynamically, and the TRPs in the TRP cluster are used for providing a communication service for the terminal device. The communication system based on multi-user MIMO provided in the present disclosure can prevent a boundary effect in a cellular network, thereby ensuring the communication quality and the communication stability.

## Description

### TECHNICAL FIELD

The present disclosure relates to the field of communication technology, and in particular to a communication system based on distributed multi-user multiple input multiple output (MIMO).

### BACKGROUND

In a cellular network, when a terminal device is located at a cell boundary, the signal coverage at the cell boundary is poor, which will result in poor communication quality of the terminal device and affect the user experience. Therefore, a communication system is urgently needed to solve the boundary effect of the cellular network.

### SUMMARY

A distributed MIMO based communication system proposed in the present disclosure is used to solve the boundary effect of the cellular network.

In a first aspect, an embodiment of the present disclosure provides a distributed MIMO based communication system, including at least one control unit (CU), at least one transmission reception point (TRP), and at least one terminal device.

The at least one CU is configured to schedule multiple TRPs, the CU corresponds to a TRP cluster, the TRP cluster includes at least two TRPs, the TRPs in the TRP cluster can be scheduled by the CU corresponding to the TRP cluster, the number of the TRPs included in the TRP cluster corresponding to the CU is less than or equal to a total number of TRPs that can be scheduled by the CU, the TRPs included in the TRP cluster can change dynamically, and the TRPs in the TRP cluster are configured to provide communication services for the terminal device.

In the distributed MIMO based communication system provided by the present disclosure, the TRPs included in the TRP cluster can change dynamically, so when providing communication services for the terminal device based on the TRPs in the TRP cluster, no matter where the terminal device moves, the CU will dynamically change the TRPs in the TRP cluster to always select the TRP that is most beneficial to the terminal device (such as the TRP with better communication quality) to provide communication services for the terminal device, thereby avoiding the boundary effect in the cellular network and ensuring the communication quality. Moreover, in the present disclosure, since the TRPs included in the TRP cluster can be changed dynamically, the boundary of the TRP cluster can be made flexible. Therefore, when the terminal device moves to the boundary of the TRP cluster, the CU can expand the boundary of the TRP cluster by dynamically changing the TRP in the TRP cluster, so that the terminal device can still perform communication through the TRP in the TRP cluster without frequently switching cells as in the cellular network, thereby ensuring communication stability.

### BRIEF DESCRIPTION OF THE DRAWINGS

The above and/or additional aspects and advantages of the present disclosure will become apparent and easily understood from the following description of the embodiments in conjunction with the accompanying drawings, in which:

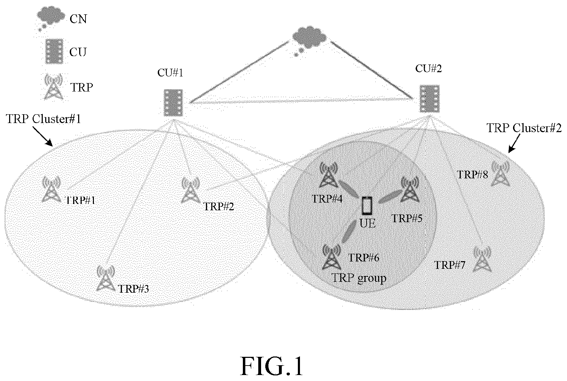

FIG. 1 is a schematic diagram of an architecture of a distributed MIMO based communication system provided in an embodiment of the present disclosure.

### DETAILED DESCRIPTION

Illustrative embodiments will be described in detail herein, examples of which are shown in the accompanying drawings. When the following description refers to the drawings, the same numbers in different drawings represent the same or similar elements unless otherwise indicated. The implementations described in the following illustrative embodiments do not represent all implementations consistent with the embodiments of the present disclosure. Instead, they are merely examples of apparatus and methods consistent with some aspects of the embodiments of the present disclosure as detailed in the appended claims.

The terms used in the embodiments of the present disclosure are only for the purpose of describing specific embodiments and are not intended to limit the embodiments of the present disclosure. The singular forms of "a", "an" and "the" used in the embodiments of the present disclosure and the appended claims are also intended to include plural forms unless the context clearly indicates otherwise. It should also be understood that the term "and/or" used herein refers to and includes any or all possible combinations of one or more associated listed items.

It should be understood that although the terms first, second, third, etc. may be used to describe various information in the embodiments of the present disclosure, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the words "if" and "in a case where" as used herein may be interpreted as "upon" or "when" or "in response to determining".

The embodiments of the present disclosure are described in detail below, and examples of the embodiments are shown in the accompanying drawings, in which the same or similar reference numerals throughout represent the same or similar elements. The embodiments described below with reference to the accompanying drawings are illustrative and are intended to be used to explain the present disclosure, and cannot be understood as limiting the present disclosure.

To facilitate understanding, the terms involved in the present disclosure are first introduced.
1. Transmission reception point ( TRP)
   Configured to transmit data to or receive data from terminal devices.
2. Control Unit (CU)

A monitoring client unit configured to execute computer instructions or ClientUnit monitoring systems. The CU is responsible for process management of procedures. The CU is generally connected to multiple TRPs to aggregate information of TRPs to CU so that the CU can coordinate the scheduling of wireless resources. Different CUs exchange information through an optical fiber or a core network.

FIG. 1 is a schematic diagram of a distributed MIMO based communication system provided by an embodiment of the present disclosure. As shown in FIG. 1, the communication system may include at least one CU, at least one TRP, and at least one terminal device (i.e., the UE in FIG. 1); where the TRP may be configured to provide communication services for the terminal device, and the CU may be configured to schedule the TRP.

In an embodiment of the present disclosure, the at least one CU can be configured to schedule multiple TRPs, where one CU can be configured to schedule one or more TRPs, the CU corresponds to a TRP cluster, one TRP cluster can include at least two TRPs (for example, a TRP cluster can be composed of two or more adjacent TRPs), the TRPs in the TRP cluster can be scheduled by the CU corresponding to the TRP cluster, and the number of TRPs included in the TRP cluster corresponding to the CU is less than or equal to a total number of TRPs that the CU can schedule. That is, in an embodiment of the present disclosure, the TRP cluster corresponding to the CU can include all or some of the TRPs (such as some adjacent TRPs) that the CU can schedule.

For example, as shown in FIG. 1, the distributed MIMO based communication system includes two CUs, namely CU#1 and CU#2, where CU#1 corresponds to TRP cluster #1, CU#2 corresponds to TRP cluster #2, the TRPs in the TRP cluster #1 can all be scheduled by CU#1, and the TRPs in the TRP cluster #2 can all be scheduled by CU#2.

Furthermore, in an embodiment of the present disclosure, the CU also corresponds to a TRP group (i.e., the TRP group in FIG. 1), the TRPs in the TRP cluster corresponding to the CU that provide communication services for the same terminal device belong to one TRP group, the TRP group may include at least one TRP, and the TRP group corresponding to the CU is a subset of the TRP cluster corresponding to the CU, or the TRP group corresponding to the CU is the same as the TRP cluster corresponding to the CU.

For example, as shown in FIG. 1, TRP cluster #2 corresponding to CU#2 includes a TRP group, and the TRP group includes three TRPs, namely TRP#4, TRP#5, and TRP#6. TRP#4, TRP#5, and TRP#6 are all configured to provide communication services for the terminal device.

It should be noted that, in an embodiment of the present disclosure, the TRPs included in the TRP group can change dynamically.

Specifically, in an embodiment of the present disclosure, the CU may be configured to dynamically change the TRPs in the TRP group based on measurement results of a reference signal for at least one first TRP sent by the terminal device, where the first TRP may be a TRP with a distance from the terminal device being less than a first preset threshold. The measurement results of the reference signal for the first TRP may be obtained by the terminal device by monitoring and measuring the reference signal for the first TRP in real time.

In an embodiment of the present disclosure, after receiving the measurement results of the reference signal for the at least one first TRP sent by the terminal device, the CU can be configured to: determine multiple candidate TRPs based on the measurement results of the reference signal for the at least one first TRP, determine a second TRP from the multiple candidate TRPs, and dynamically change the second TRP to be included in the TRP group serving the terminal device.

In an embodiment of the present disclosure, the candidate TRP may be a TRP with better communication quality among the at least one first TRP. On this basis, the CU may determine the multiple candidate TRPs using at least one of the following methods. Specifically, the CU may also be configured to:
determine the first TRPs with the measurement results of the reference signal being greater than a second preset threshold as the candidate TRPs; and/or
sort the measurement results of the reference signals for the first TRPs in an order from best to worst, and determine the first TRPs corresponding to a third preset threshold number of measurement results of the reference signals on top in the sorted measurement results, as the candidate TRPs. The first preset threshold, the second preset threshold, and the third preset threshold can all be pre-set.

It should also be noted that, in an embodiment of the present disclosure, a TRP may be scheduled by at least two CUs in a time division or frequency division manner. Specifically, a TRP being scheduled by at least two CUs in the time division manner may include that the TRP can be scheduled by CU#1 in a first time period and the TRP can be scheduled by CU#2 in a second time period. A TRP being scheduled by at least two CUs in the frequency division manner may include that the TRP can be scheduled by CU#1 in a first frequency range and the TRP can be scheduled by CU#2 in a second frequency range.

On this basis, in an embodiment of the present disclosure, the CU can be configured to: determine at least one TRP that can be scheduled by the CU among the multiple candidate TRPs as the second TRP(s). Specifically, the at least one TRP that can be scheduled by the CU at the current moment among the multiple candidate TRPs can be determined as the second TRP(s). The at least one TRP that can be scheduled by the CU at the current moment can be understood as: the TRP(s) that can be scheduled by the CU at the current time point, or the TRP(s) that can be scheduled by the CU in a frequency range corresponding to the current time point.

It can be understood from the above that the dynamic change of the TRP group is essentially caused by the change of the candidate TRP(s) corresponding to the terminal device, and the candidate TRP(s) is essentially the TRP(s) with better communication quality adjacent to the terminal device. On this basis, when the terminal device moves, or when the channel condition of the terminal device changes, it will cause the candidate TRP(s) corresponding to the terminal device to change, which in turn causes the TRP group providing services for the terminal device to change. Therefore, in an embodiment of the present disclosure, that the TRPs included in the TRP group can dynamically change may include at least one of the following:
the TRPs included in the TRP group dynamically change as the terminal device moves; or
the TRPs included in the TRP group change dynamically as the channel conditions of the terminal device change.

In an embodiment of the present disclosure, the CU is further configured to: send a notification message to the terminal device in a case where a TRP in the TRP group changes. The notification message may indicate at least one of the following:
an identification of the TRP that has changed in the TRP group; or
a communication resource between the terminal device and the TRP that has changed in the TRP group, where the communication resource may be, for example, a beam identification.

Furthermore, in an embodiment of the present disclosure, the TRPs included in the TRP cluster corresponding to the CU may also change dynamically.

In an embodiment of the present disclosure, the dynamic change of the TRPs included in the TRP cluster may be caused by the dynamic change of the TRPs included in the TRP group. In a case where the TRPs included in the TRP group change dynamically, if the changed TRP in the TRP group is not included in the TRP cluster to which the TRP group belongs, that is, switching of the TRP in the TRP group is not within the TRP cluster, then the TRP cluster corresponding to the TRP group will also change. Specifically, the CU can be configured to: when the multiple candidate TRPs corresponding to the terminal device are determined, include at least one TRP that can be scheduled by the CU and does not currently belong to the TRP cluster among the multiple candidate TRPs into the TRP cluster corresponding to the CU. The "at least one TRP that can be scheduled by the CU" here is different from the aforementioned "at least one TRP that can be scheduled by the CU at the current moment". The "at least one TRP that can be scheduled by the CU" can be: a TRP that can be scheduled by the CU at any time, or a TRP that can be scheduled by the CU at any frequency.

For example, referring to FIG. 1, the TRP group currently providing communication services for the terminal device belongs to TRP cluster #2 scheduled by CU#2. The TRP group includes three TRPs, namely TRP#4, TRP#5, and TRP#6, of which TRP#5 can be scheduled by CU#2 only, and TRP#4 and TRP#6 can be scheduled by both CU#1 and CU#2, but at the current moment, TRP#4 and TRP#6 are scheduled by CU#2. At this time, if the terminal device moves to the left, the terminal device will move away from TRP#5 and approach TRP#2, TRP#4, and TRP#6, and the terminal device will determine TRP#2, TRP#4, and TRP#6 as the TRPs adjacent to the terminal device (that is, the first TRPs mentioned above). Then the terminal device will monitor and measure the reference signals for TRP#2, TRP#4, and TRP#6 to obtain the measurement results, and send the measurement results of the reference signals for TRP#2, TRP#4, and TRP#6 to CU#2. Assuming that CU#2 determines, based on the measurement results of the reference signals for TRP#2, TRP#4, and TRP#6, that the communication qualities of TRP#2, TRP#4, and TRP#6 are all high, CU#2 can determine TRP#2, TRP#4, and TRP#6 as the candidate TRPs, and, assuming that TRP#2, TRP#4, and TRP#6 can all be scheduled by CU#2 at the current moment, then at this time, CU2 can dynamically adjust TRP#2 into the TRP cluster #2 corresponding to CU#2, and dynamically change the TRPs in the TRP group corresponding to CU#2 from original TRP#5, TRP#4, and TRP#6 to TRP#2, TRP#4, and TRP#6.

In another embodiment of the present disclosure, the dynamic change of the TRPs included in the TRP cluster may be caused by the change in communication scenarios. For example, in some embodiments, the communication scenarios may include a transmission delay between the CU and the TRP, for example, when the CU determines that the transmission delay between the CU and some of the TRPs in the TRP cluster is large, the CU can dynamically schedule the TRP(s) with the larger transmission delay out of the TRP cluster corresponding to the CU.

It should be noted that the above introduction of the communication scenarios is only introduction of some of the examples. It should be understood that in the communication system, other similar concepts and solutions should also fall within the protection scope of the present disclosure.

Furthermore, in an embodiment of the present disclosure, the CU is also configured to: in a case where a new TRP is added to the TRP cluster, send indication information to the new TRP, and the indication information can be configured to indicate that a cluster update occurs for the new TRP, and/or, indicate to the new TRP the communication resources used in the updated TRP cluster, where the communication resources may be broadcast channels and/or system messages, etc.

In addition, in an embodiment of the present disclosure, the communication system may further include a core network (CN), and different CUs may communicate with each other through the CN. Alternatively, in an embodiment of the present disclosure, different CUs may communicate with each other through optical fibers. The CU and TRP may also communicate with each other through optical fibers.

To sum up, the distributed MIMO based communication system provided by the embodiment of the present disclosure includes at least one CU, at least one TRP, and at least one terminal device; where a CU is configured to schedule multiple TRPs, the CU corresponds to a TRP cluster, the TRP cluster includes at least two TRPs, the TRPs in the TRP cluster can be scheduled by the CU corresponding to the TRP cluster, the number of the TRPs included in the TRP cluster corresponding to the CU is less than or equal to the total number of the TRPs that the CU can schedule, the TRPs included in the TRP cluster can be changed dynamically, and the TRPs in the TRP cluster are configured to provide communication services for the terminal device. In the present disclosure, the TRPs included in the TRP cluster can be changed dynamically, so when communication services are provided for the terminal device based on the TRPs in the TRP cluster, no matter where the terminal device moves, the CU will dynamically change the TRP in the TRP cluster, so as to always select the TRP(s) that is most beneficial to the terminal device (such as the TRP(s) with better communication quality) to provide communication services for the terminal device (for example, always select the TRP group in the TRP cluster that is most beneficial to the terminal device to provide communication services for the terminal device), thereby avoiding the boundary effect in the cellular network and ensuring the communication quality. Furthermore, in the present disclosure, since the TRPs included in the TRP cluster can be changed dynamically, the boundary of the TRP cluster can be made flexible. Thus, when the terminal device moves to the boundary of the TRP cluster, the CU can expand the boundary of the TRP cluster by dynamically changing the TRPs in the TRP cluster, so that the terminal device can still perform communication through the TRPs in the TRP cluster without frequent cell switching as in the cellular network, thereby ensuring communication stability.

The communication system in the present disclosure is explained below by way of example.

As shown in FIG. 1, the parts are defined as follows.

TRP: Transmission Reception Point, configured to transmit data to UE or receive data from UE.

CU: Control unit, generally connected to multiple TRPs through optical fibers, aggregates information of the TRPs to a central controller, and performs cooperation scheduling on the wireless resources. Different CUs exchange information through optical fibers or a core network.

TRP cluster: Two or more TRPs form a TRP cluster. One possible way is to configure two or more adjacent TRPs as a TRP cluster. The TRPs in a TRP cluster are controlled and scheduled by the same CU, and the same TRP can be scheduled by two or more CUs in a time division or frequency division manner.

TRP group: A subset of a TRP cluster. TRPs in a TRP cluster are scheduled by a CU and are configured to transmit data to a UE at the same time.

In the present disclosure, the UE can be connected to multiple TRPs concurrently, the multiple TRPs transmit data to the UE, and these TRPs belong to the same TRP cluster. In addition, in this solution, the boundary of the TRP cluster is flexible, breaking the fixed limit of the traditional cell boundary, so that the network always selects the TRP group of the TRP cluster that is most beneficial to the UE to transmit data to the user.

Those skilled in the art can also understand that the various illustrative logical blocks and steps listed in the embodiments of the present disclosure can be implemented by electronic hardware, computer software, or a combination of the both. Whether the functions are implemented by hardware or software depends on the specific applications and the design requirements of the entire system. Those skilled in the art can use various methods to implement the functions described for each specific application, but such implementations should not be understood as exceeding the protection scope of the embodiments of the present disclosure.

The present disclosure also provides a readable storage medium having stored thereon instructions which, when being executed by a computer, implement the functions of any of the above method embodiments.

The present disclosure also provides a computer program product which, when being executed by a computer, implements the functions of any of the above method embodiments.

The above embodiments can be implemented all or in part by software, hardware, firmware or any combination thereof. When implemented using software, it can be implemented all or in part in the form of a computer program product. The computer program product includes one or more computer programs. When the computer program(s) is loaded and executed on a computer, the processes or functions described in the embodiments of the present disclosure are generated in whole or in part. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from a website, computer, server or data center to another website, computer, server or data center by a wired (e.g., coaxial cable, optical fiber, digital subscriber line (DSL)) or wireless (e.g., infrared, wireless, microwave, etc.) mode. The computer-readable storage medium may be any available medium that can be accessed by a computer can access or a data storage device, such as a server or data center, that includes one or more available media integrated. The available medium may be a magnetic medium (e.g., a floppy disk, a hard disk, a magnetic tape), an optical medium (e.g., a digital video disc (DVD)), or a semiconductor medium (e.g., a solid state disk (SSD)).

A person skilled in the art can understand that the numerical numbers such as first and second involved in the present disclosure are only used for the convenience of description and are not used to limit the scope of the embodiments of the present disclosure or to indicate the order of precedence.

At least one in the present disclosure can also be described as one or more, and multiple can be two, three, four or more, which is not limited in the present disclosure. In the embodiments of the present disclosure, for a certain kind of technical features, the technical features in the kind of technical features are distinguished by "first", "second", "third", "A", "B", "C" and "D", etc., and there is no order of precedence or size between the technical features described by the "first", "second", "third", "A", "B", "C" and "D".

The corresponding relationships shown in the tables in the present disclosure can be configured or predefined. The values of the information in the table are only examples and can be configured as other values, which are not limited in the present disclosure. When configuring the corresponding relationship between the information and the parameters, it is not necessarily required to configure all the corresponding relationships illustrated in the tables. For example, in the tables in the present disclosure, the corresponding relationships shown in some rows may not be configured. For another example, appropriate deformation adjustments can be made based on the above tables, such as splitting, merging, etc. The names of the parameters shown in the titles of the above tables can also use other names that can be understood by the communication device, and the values or representations of the parameters can also be other values or representations that can be understood by the communication device. When implementing the above tables, other data structures can also be used, such as arrays, queues, containers, stacks, linear lists, pointers, linked lists, trees, graphs, structures, classes, heaps, hashing tables or hash tables.

The predefined in the present disclosure may be understood as defined, defined in advance, stored, pre-stored, pre-negotiated, pre-configured, solidified, or pre-bumed.

Those of ordinary skill in the art will appreciate that the units and algorithm steps of the examples described in conjunction with the embodiments disclosed herein can be implemented in electronic hardware, or a combination of computer software and electronic hardware. Whether these functions are performed in hardware or software depends on the specific application and design constraints of the technical solution. Professional and technical personnel can use different methods to implement the described functions for each specific application, but such implementations should not be considered as going beyond the scope of the present disclosure.

Those skilled in the art can clearly understand that, for the convenience and brevity of description, for the specific working processes of the systems, devices and units described above, reference can be made to the corresponding processes in the aforementioned method embodiments, which will not be repeated here.

Those described above are merely specific implementations of the present disclosure, but the protection scope of the present disclosure is not limited thereto. Any person skilled in the art who is familiar with the present technical field can easily think of changes or substitutions within the technical scope disclosed in the present disclosure, which should be included in the protection scope of the present disclosure. Therefore, the protection scope of the present disclosure should be according to the protection scope of the claims.

## Claims

1. A distributed MIMO based communication system, comprising at least one control unit (CU), at least one transmission reception point (TRP), and at least one terminal device;
wherein the at least one CU is configured to schedule multiple TRPs, the CU corresponds to a TRP cluster, the TRP cluster comprises at least two TRPs, the TRPs in the TRP cluster are schedulable by the CU corresponding to the TRP cluster, a number of the TRPs comprised in the TRP cluster corresponding to the CU is less than or equal to a total number of TRPs that are schedulable by the CU, the TRPs comprised in the TRP cluster are dynamically changeable, and the TRPs in the TRP cluster are configured to provide communication services for the terminal device.

2. The communication system according to claim 1, wherein the CU also corresponds to a TRP group, the TRPs in the TRP cluster corresponding to the CU that provide communication services for the same terminal device belong to one TRP group; the TRP group comprises at least one TRP, and the TRP group corresponding to the CU is a subset of the TRP cluster corresponding to the CU, or the TRP group corresponding to the CU is the same as the TRP cluster corresponding to the CU; and the TRP comprised in the TRP group is dynamically changeable.

3. The communication system according to claim 2, wherein that the TRP comprised in the TRP group is dynamically changeable comprises at least one of:
the TRP comprised in the TRP group changes dynamically as the terminal device moves; or
the TRP comprised in the TRP group changes dynamically as a channel condition of the terminal device changes.

4. The communication system according to claim 2 or 3, wherein the CU is configured to dynamically change the TRP in the TRP group based on a measurement result of a reference signal for at least one first TRP sent by the terminal device;
wherein the first TRP is a TRP with a distance to the terminal device being less than a first preset threshold.

5. The communication system according to claim 2 or 3, wherein the CU is further configured to send a notification message to the terminal device in a case where the TRP in the TRP group changes.

6. The communication system according to claim 5, wherein the notification message indicates at least one of:
identification of the TRP that has changed in the TRP group; or
a communication resource between the terminal device and the TRP that has changed in the TRP group.

7. The communication system according to claim 1, wherein the CU is further configured to: in a case where a new TRP is added to the TRP cluster, send indication information to the new TRP, and the indication information is configured to indicate that a cluster update occurs for the new TRP and/or to indicate to the new TRP a communication resource used in the updated TRP cluster.

8. The communication system according to claim 1, wherein one TRP is scheduled by at least two CUs in a time division or frequency division manner.

9. The communication system according to claim 1, wherein the communication system further comprises a core network (CN); and
different CUs communicate with each other through the CN.

10. The communication system according to claim 1, wherein different CUs communicate with each other via an optical fiber.
